# EUROPEAN PATENT SPECIFICATION

(11) **EP 2 481 519 B1**
(45) Date of publication and mention of the grant of the patent: **04.11.2015**
(21) Application number: 11152962.4
(22) Date of filing: 01.02.2011
(51) Int. Cl.: B23P 11/02, B23P 15/00, B23P 19/04, F01L 3/22, B23P 21/00

(54) **Method and plant for processing a machined automotive part, in particular for processing a cylinder head**
Verfahren und Anlage zur Verarbeitung eines bearbeiteten Automobilteils, insbesondere zur Verarbeitung eines Zylinderkopfs
Procédé et usine pour le traitement d'une pièce automobile usinée, en particulier pour le traitement d'une tête de cylindre

(43) Date of publication of application: 01.08.2012
(73) Proprietor: ELWEMA Automotive GmbH, 73479 Ellwangen (DE)
(72) Inventor: Alvarez, Antonio, 52224, STOLBERG (DE)
(74) Representative: Lippert, Stachow & Partner

(56) References cited:
- EP-A1- 0 646 440
- EP-A2- 0 740 054
- JP-A- 7 164 250
- US-A- 5 213 073

## Description

### Technical field

The present invention generally relates to processing a machined automotive part such as a cylinder head of an internal combustion engine. More specifically, the invention relates to processing that involves cleaning a machined part with heated fluid in order to remove machining remainders as well as subsequent shrinkage-fitting one or more additional components to the part.

### Background Art

It is well known in the art of manufacturing machined automotive parts, such as cylinder heads or cylinder blocks of an internal combustion engine or such as gearboxes, that intermediate cleaning of the parts after machining and prior to further processing significantly improves part quality. Accordingly intermediate removal of machining remainders, e.g. swarf, shavings or burr, by liquid washing has become almost mandatory in the automotive industry. This is especially true in case of internal combustion engine parts that have to satisfy stringent requirements, e.g. as to leak tightness. In case of cylinder heads for instance, cleaning ensures among others that no particles will be present in the cylinder head that could adversely affect subsequent fitting of additional components, e.g. valve stem guides or valve seat inserts.

Automated leak testing of machined automotive parts has also become a more and more adopted step in order to verify part quality and avoid any unnecessary subsequent processing of defective parts that are rejected from the process. Cylinder heads for instance are nowadays commonly subjected to automated leak testing before their manufacture is completed among others by assembling the required valve components with the cylinder head.

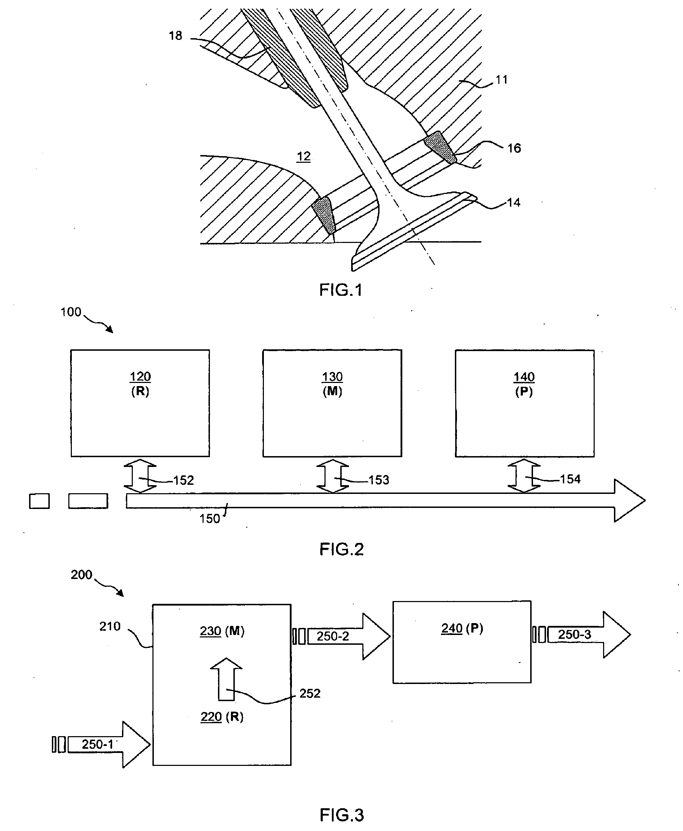

Additional components that have to be fitted to an initially machined and subsequently cleaned part are in many instances fitted to the part by means of thermal interference fitting. Valve seat inserts and valve stem guides for instance (see enclosed FIG.1), are fitted into the cylinder head by means of special cryogenic freeze fitting that requires, besides optional heating of the cylinder head, lowering temperature of the valve seat insert to extremely low temperatures, typically well below -120°C (<153° Kelvin).

A known integrated and completely automated plant that permits performing each of the aforementioned steps, e.g. cleaning, testing and assembly of cylinder heads for internal combustion engines, has been developed by ELWEMA Automotive GmbH, Ellwangen, Germany. This plant is described in the brochure entitled "Ideen fur die Zukunft" (page 14-15) by ELWEMA. It comprises a so-called µ"RPM suite" that includes the following integrated sequence of modular stations: a cleaning station ("Reinigen") for cleaning e.g. a cylinder head, a leak testing station for leak testing the washed cylinder head ("Prüfen") and for assembling ("Montieren") i.e. fitting components, e.g. valve seat inserts and stem guides to the washed and leak tested cylinder head.

A main benefit of this award-winning plant, according to periodical "Produktion" (see page 5 of issue 29-30, 29 July 2010, by Verlag Moderne Industrie GmbH, Landsberg/Lech, Germany (publ.)), is that of reducing overall energy consumption in processing machined automotive parts such as, among others, cylinder heads, cylinder blocks, especially unitary crankcase-cylinder blocks, and gearboxes. U.S. patent no. 5,213,073 teaches a different process and plant for assembling, cleaning and testing cylinder heads. Shrinkage fitting before cleaning is also taught in Japanese Patent application JP 7-164250.

### Technical problem

It is an object of the present invention to provide a method and plant of the previously described type that enables an additional decrease in total energy consumption in processing a machined automotive part.

This object is achieved by a method as claimed in claim 1 and by an industrial plant, i.e. a system of machines, as claimed in claim 9.

### General Description of the Invention

The invention relates to a method and a corresponding industrial plant for processing a prefabricated and machined automotive part, such as a cylinder head. The plant and method of concern involve:
- cleaning the machined part with heated fluid, e.g. by hot water washing, in order to remove machining remainders;
- testing the part for compliance with one or more pre-determined requirements, in particular leak-testing; and
- thermal interference fitting of one or more additional components to the part.

In order to overcome the above-mentioned problem and in accordance with the invention, the process and stations are arranged for a sequence of processing with cleaning prior to thermal interference fitting and with thermal interference fitting prior to testing. As will be appreciated, this sequence enables thermal interference fitting to make use or to take advantage of residual thermal expansion of the part produced as a side-effect of cleaning with heated fluid. The plant and process are particularly but not exclusively suitable for automotive parts such as transmission, engine or steering components. The invention is specifically suitable for fitting one or more valve seat inserts and/or valve stem guides to a cylinder head.

As will be appreciated, the present invention processes contrary to hitherto adopted practice of testing the machined part prior to assembly, in particular prior to thermal interference fitting of additional components. In fact, this known typical practice has evidently been adopted to avoid reject loss of or wastage of additional components because it avoids mounting additional components to a defect blank part, e.g. a fissured cylinder head blank. Hence, instead of the well established sequence (RPM): cleaning -> testing -> assembling, the invention, with its sequence of cleaning -> assembling -> testing (=RMP), has the remarkable merit of processing against common practice.

As a salient advantage of this approach, total energy consumption of the overall system is significantly reduced. In fact, power consumption related to thermal interference fitting, i.e. to supplementary heating of the processed part and/or cryogenic cooling to very low temperatures, is considerably reduced. Preferably, cryogenic cooling to very low temperatures is avoided completely or cooling is at least considerably reduced in extent. Additional heating typically required after testing (at nominal room temperature) may also be eliminated.

Further preferred features are defined in the enclosed dependent claims 2 - 7 for the method and in dependent claims 9 - 15 for the plant.

### Brief Description of the Drawings

Preferred embodiments of the invention will now be described, by way of example and in non-limiting manner, with reference to the attached drawings in which:
FIG.1 is a cross sectional view through an intake/exhaust port of a cylinder head for illustrating interference fit of a valve seat insert and of a stem guide in the body of the cylinder head;
FIG.2 is a block schematic diagram of a method and plant according a first embodiment of the invention;
FIG.3 is a block schematic diagram of a method and plant according a second embodiment of the invention;
FIG.4 is a perspective view of a cleaning station for a machined automotive part in a plant according to the embodiment of FIG.2;
FIG.5 is a perspective view of an assembly station for fitting one or more additional components to the machined automotive part by thermal interference in a plant according to the embodiment of FIG.2;
FIG.6 is a perspective view of a combined module including a cleaning and an assembly station in a plant according to the embodiment of FIG.3.

### Description of Preferred Embodiments

FIG.1 illustrates a portion in the body of a cylinder head 11 for an internal combustion engine (ICE). More specifically, FIG.1 shows the portion around one intake or exhaust port 12 of the ICE. A cylinder head 11 is typically produced by casting, e.g. of iron or an aluminum alloy. Normally, the cast blank of the cylinder head 11 is subjected to various machining i.e. metal removing operations such as drilling, milling or reaming by processing steps that precede the present process.

As seen in FIG.1, the cylinder head 11 comprises an intake or exhaust valve 14. A modern four stroke ICE usually has four valves per cylinder, two intake and two exhaust valves respectively, e.g. sixteen valves in a four-cylinder ICE. For each such valve 14, the cylinder head 11 has a seating, into which a separate valve seat insert 16 has to be fixedly mounted. The seating of the valve seat insert 16 is typically an annular recess provided by one of the preceding machining operations in between the intake/exhaust port 12 and the opposite combustion side of the cylinder head 11. The valve seat insert 16 is a high-precision part made, in known manner, of a metal alloy of appropriate properties. During preceding machining, the cylinder head 11 is further provided, for each valve 14, with a bore coaxial to the valve seat insert 16 (coaxial to its seating). This bore serves for fitting a valve stem guide 18 that serves as a plain (friction) sliding bearing for the valve 14, i.e. for its stem. The valve stem guide 18 is another precision part made of high-performance metal alloy, usually different from that of the valve seat insert 16.

The valve seat insert 16 and the valve stem guide 18, being supplementary components, are mounted to the cylinder head 11 by thermal interference fitting. In the present context, thermal interference fitting may involve auxiliary cooling or "freezing" the internal inserted component, e.g. the valve seat insert 16 and the valve stem guide 18, and, in any case, involves thermally expanding the external part that receives the inserted component, e.g. the cylinder head 11. In general, thermal interference fitting refers to fitting by means of either a so-called "freeze fit" (contraction->expansion) or a so-called "shrinkage fit" (expansion -> contraction) or by means of a combination of both.

As will be noted, a cylinder head 11 as illustrated in FIG.1 is merely one possible and exemplary machined part or workpiece that can be processed according to the invention. The invention applies to any kind of processing of a previously machined and cleaned part, into which one or more additional components are mounted by thermal interference fitting. Another example of such parts is a cylinder block, typically a unitary crankcase-cylinder block, into which cylinder liners have to be fitted. Other examples of machined parts of concern are gearboxes, in particular automatic gearboxes, or steering cases for automotives. As will be understood from the following, most benefits are earned with machined parts having a large number of components fitted by thermal interference (e.g. a cylinder head 11 of a six-cylinder ICE with twenty-four valve seat inserts 16 and twenty-four valve stem guides 18).

FIG.2 schematically illustrates, in the manner of a flow diagram, a first embodiment of the proposed process and corresponding plant 100. The plant of FIG.2 is a fully automated system with three modular stations 120, 130, 140. In the present context, the term "station" refers to one or more items of equipment at a location in the system where a particular operation takes place.

The station 120 is a cleaning station that automatically cleans the machined automotive part, e.g. the cylinder head 11. Such cleaning may involve several steps and different cleaning fluids. It usually includes complete or partial washing of the part with heated liquid. Preferably the station 120 performs flood-washing at washing temperatures well above 50°C, preferably above 60°C. As a main purpose, cleaning (=R for "Reinigen" in German) at station 120 removes any unwanted remainders of machining, such as swarf, shavings or burr and cutting oil for instance. This warrants, among others, unhampered subsequent fitting of additional components. Instead of cylinder heads 11, the station 120 may of course be configured for automatic cleaning of any other similar machined part, to which additional components are fitted subsequently, e.g. a cast cylinder block (not shown). Known features of a module suitable as cleaning station 120 that is commercially available under the name "modulare Reinigungsanlage" from ELWEMA Automotive GmbH, Ellwangen, Germany are incorporated by reference.

The station 130 is an assembly station configured to perform automatic thermal interference fitting of additional components to the part. More specifically, the station 130 performs automatic mounting (=M for "Montage" in German) by thermal interference fitting of several valve seat inserts 16 and of several valve stem guides 18 to the cylinder head 11 (see in FIG.1). The station 130 may also be configured for fitting the required cylinder liners to a cylinder block (not shown) or for any other thermal interference fitting. Known details of a module suitable as assembly station 130 that is commercially available as "thermische Montagemaschine" from ELWEMA Automotive GmbH, Ellwangen, Germany, are incorporated by reference.

The station 140 is an automatic testing station that tests (=P for "Prüfen" in German) the machined automotive part subjected to processing, e.g. the cylinder head 11, for compliance with one or more pre-determined requirements, e.g. for testing whether oil and coolant conduits inside the cylinder head 11 are leak-proof and/or whether other functional cavities, e.g. for spark-plugs or camshaft timing, are leak-proof. Known details of a module suitable as assembly station 130 that is commercially available as "Lecktestmaschine" from ELWEMA Automotive GmbH, Ellwangen, Germany, are incorporated by reference.

As best illustrated in FIG.2, the stations 120, 130, 140 of the plant 100 are of modular design. More importantly, the stations 120, 130, 140 are arranged according to a processing sequence cleaning -> assembling -> testing (RMP). In other words, at first the part is processed in the cleaning station 130 (R). Secondly, after leaving the cleaning station 130 and, most remarkably, before passing to the testing station 140, the part is processed in the assembly station 130 (M). Only after such assembling, the part is tested in the testing station 140. In other words, testing (P) is done after thermal interference fitting.

As will be appreciated, this seemingly simple order has the merit of enabling thermal interference fitting in the assembly station 130 to take advantage of residual thermal expansion that unavoidably occurs as "by-product" of cleaning. The machined automotive part, e.g. the cylinder head 11, naturally expands when cleaned with heated fluid. According to the invention, residual thermal expansion serves at least a partial and contributory "shrinkage fit" (expansion->contraction) during thermal interference fitting at the assembly station 130.

In order to fully automate the plant 100 and to achieve short operating cycles, the plant 100 has an automated conveyor system, schematically indicated at 150 in FIG.2. A preferred conveyor system 150 is a fully automated tray/carrier conveyor but may of a simple belt/chain type, of a powered roller type or of any other suitable type. As indicated schematically by arrow direction in FIG.2, the conveyor system 150 conveys the parts, e.g. the cylinder heads 11, to the cleaning station 120, from there to the assembly station 130 and from there to the testing station 140, and typically further downstream for subsequent processing such as assembly of the ICE. The conveyor system 150 is preferably supplemented by industrial robots 152; 153; 153 at the cleaning station 120, the assembly station 130 and the testing station 140 respectively, for picking the part from and putting it back onto the conveyor system 150 to allow efficient processing at each station respectively.

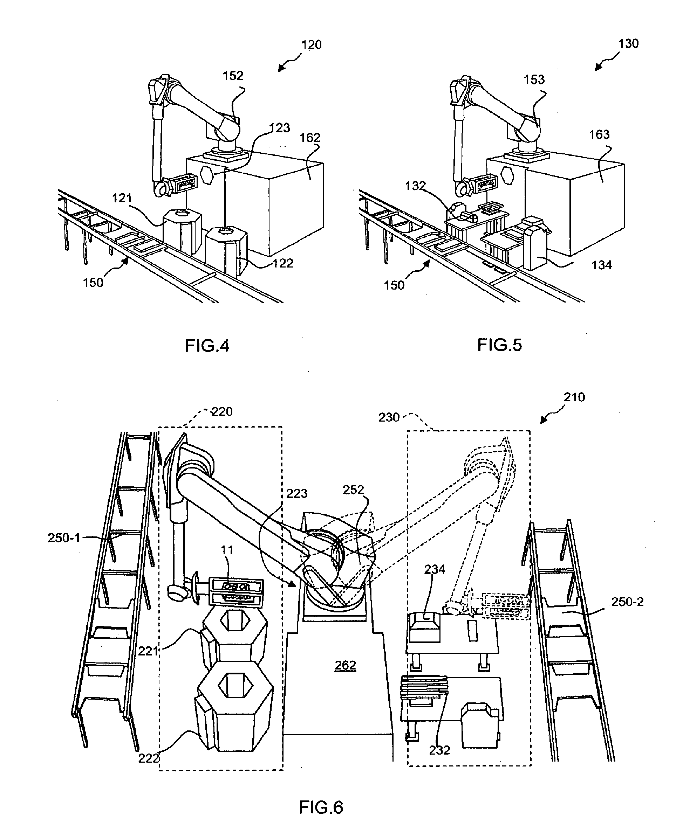

FIG.4 illustrates an example of an automatic industrial cleaning station 120 suitable for a plant and process as in FIG.2. The cleaning station 120 comprises a six-degree-of-freedom robot 152, e.g. a standard type articulated industrial robot, for automatically moving, holding and positioning the part. Suitable 6-DOF robots are available for instance from FANUC Robotics Europe, Echternach, Luxembourg in their series named "M-710iC" or "R-2000iB" for instance. As seen in FIG.4, the robot 152 has a suitably designed end-effector (also called gripper) adapted to the part, e.g. to a cylinder head 11. As seen in FIG.4, the station 120 may comprise several cleaning units e.g. a pre-washing unit 121, a flood-washing unit 122 and a drying unit 123. The station 120 thus subjects the machined work piece, e.g. the cylinder head 11, in the given order, to processing in the pre-washing unit 121, in the flood-washing unit 122 and finally in the drying unit 123. The cleaning station 120 may have additional functions and equipment. In particular, high-pressure jet deburring may be incorporated, e.g. in conjunction with flood-washing inside a receptacle of the flood-washing unit 122. As seen in FIG.4, the robot 152 is arranged on an elevated dedicated pedestal 162 above the upper inlets of the units 121, 122. The elevated position improves manoeuvrability of the robot 152 and enables housing accessories of the pre-washing and flood-washing equipment 121, 122 inside the pedestal 162. Moreover, as seen in FIG.4, the drying unit 123, which is typically a vacuum drying unit for removing liquids from the part, may be incorporated into the pedestal 162. Instead, the drying unit 123 may be configured for hot air blowing at temperatures well above 50°C, preferably above 90°C. In the latter case, additional thermal expansion is obtained. The flood-washing unit 122 is preferably configured with a receptacle for full immersion flood-washing of the part and, in any case, to operate at a washing temperature of at least 50°C, preferably at least 60°C. To this effect the flood-washing water supply of the flood-washing unit 122 is equipped, in per se known manner, with one or more suitable heaters to warrant efficient flood-washing. The pre-washing unit 121 may operate with heated washing liquid, e.g. at lower temperatures, or without heating.

As will be understood, the units 121, 122, 123 are each arranged within the work envelope, i.e. the reachable workspace, of the robot 152 that is dedicated to the modular station 120. The station 120 of FIG.4 is designed for performing, in sequence, the following steps of a complete cleaning process:
- the robot 152 takes a part from the conveyor system 150 and moves the part into the pre-washing unit 121;
- pre-washing the part inside the pre-washing unit 121;
- the robot 152 moves the part from the pre-washing unit 121 into the flood-washing unit 122;
- flood-washing the immersed part with heated liquid, e.g. water with cleaning additives, at temperatures of at least 50°C, preferably >60°C;
- the robot 152 moves the part from the flood-washing unit 122 into the drying unit 123;
- drying the part in the drying unit 123, e.g. by vacuum drying or with hot air at blowing temperatures of at least 90°C.
- the robot 152 then moves the part from the drying unit 123 back onto the conveyor 150.

As will be appreciated, due to elevated temperatures of the fluid media used in the cleaning steps, especially heated liquid in the flood-washing unit 122, and optionally hot air in the blow drying unit 123, the parts, e.g. cylinder heads 11, will unavoidably thermally expand while processed at the cleaning station 120.

FIG.5. in turn illustrates an exemplary station 130 where interference fitting is carried out after cleaning. Typically the station 130 comprises per se known equipment (not fully shown) for interference-fitting required additional components, e.g. the valve seat inserts 16 and the valve stem guides 18, to the processed part, e.g. the cylinder head 11. Taking advantage of the preceding thermal expansion, the station 130 and its equipment may however be configured without any freeze-fitting equipment or so that it comprises cooling to "high" freezing temperature, i.e. higher than typically well below -120°C (153°K). The assembly station 130 according to the invention may operate with freeze-fitting at temperatures not lower than (minus) -60°C (213°K) in addition to shrink-fitting by cleaning-induced thermal expansion. Reliable interference-fitting may be achieved by cooling the additional components to temperatures in the range of 0°C to -40°C (273°K to 233°K). Accordingly, hitherto required extremely low cooling temperatures to well below -120°C and related liquid-nitrogen-cooling equipment is avoided. Less expensive cryogenic equipment, if any, may suffice in the station 130, e.g. conventional refrigerating machines or equipment for dry-ice (frozen carbon dioxide) cooling of the additional components, such as valve seat inserts 16 and valve stem guides 18. More preferably however, pure shrink-fitting is carried out i.e. a "shrinkage fit" of uncooled additional components 16, 18 to the machined part 11 that is thermally expanded by virtue of its cleaning. In other words, mounting of additional components 16, 18 that are at room temperature is enabled and preferred, especially if interference-fitting is carried out as soon as possible and immediately after cleaning. For the specific case of a cylinder head 11, tests have demonstrated that reliable assembly can be achieved without any cooling of the valve seat inserts 16 or the stem guides 18, and even without any supplementary heating of the cylinder head 11, simply by taking advantage of thermal expansion of the cylinder head 11 due to its cleaning.

Hence, by appropriate arrangement of stations 120 and 130, expensive industrial cryogenic equipment can be avoided, and - more importantly - corresponding lower operating costs due to significantly lower energy consumption can be achieved. In any case, the station 130 as illustrated in FIG.5 comprises shrink-fitting equipment 132, 134 configured for inserting the additional components 16; 18 into a thermally expanded part. In case combined freeze-fitting and shrink-fitting is desired (despite proven unnecessary with the invention), the station 130 may have a low power-consumption cooling device (not shown in detail) of any known suitable type, which may be housed in the pedestal 163 of the associated robot 156 seen in FIG.5. In the specific example of FIG.5, the station 130 comprises a first mounting unit 132 that is configured for pressing the valve seat inserts 16 into a cylinder head 11. Preferably, the first mounting unit 132 performs parallelized i.e. synchronous insertion of the required number of valve seat inserts 16 into the desired position inside the cylinder head 11. A corresponding automatic feeder, of any suitable known type, for feeding valve seat inserts 16 from a storage to the first mounting unit 132 is provided but not shown in FIG.5. Similarly, the assembly station 130 has a second mounting unit 134 configured for parallelized pressing of several, e.g. sixteen, valve stem guides 18 into the cylinder head. With parallelized insertion by units 132, 134 identical and best available advantage is taken of residual thermal expansion for each component 16, 18 to be mounted. After automated mounting of the components 16, 18 to the part 11 by the mounting units 132, 134, the robot 153 returns, possibly after intermediate temperature adjustment of the processed part, the part 11 back to the conveyor system 150. The part then proceeds further to the testing station 140, which is of per se known configuration and therefore not described in further detail.

Turning back to FIG.3 a second embodiment of a plant 200 and process according to the invention will be briefly described and in combination with FIG.6, by way of the main differences with respect to the previous embodiments.

As seen in FIG.3 and FIG.6, the plant 200 has an integrated cleaning and assembly system 210 that incorporates both, a cleaning station 220 and an assembly station 230 which may be generally identical to those described hereinbefore with respect to FIGS.4-5. A main difference resides in that both stations 220, 230 are operated with by the same i.e. a shared robot 252. The stations 220, 230 therefore also share a common pedestal 262. Accordingly, the pedestal 262 may be dimensioned sufficiently large to accommodate accessory equipment of both stations 220, 230, in particular washing fluid preparation for the flood-washing unit 222, vacuum or hot air for the drying unit 223 and feeding equipment for the first and second mounting units 232, 234. As further seen in FIG.3 and FIG.6, instead of being arranged on the same side of a coherent conveyor as in FIG.2, the integrated cleaning and assembly system 210 is placed in between an end portion of a first conveyor section 250-1 and a start portion of a second conveyor section 250-2. Accordingly, the shared robot 252 not only supplies the different units 221, 222, 223; 232, 234 of both stations 220, 230 but also transfers the part from the first conveyor section 250-1 to the second conveyor section 250-2. Besides having a shared robot 252 and correspondingly shared pedestal 262 and the modified conveyor system 250-1, 250-2, 250-3, as best illustrated by comparing FIG.2 to FIG.3, the structure and operation of the cleaning station 220 and the assembly station 230 can be generally identical to those described in relation to FIG.4-FIG.5.

As will be appreciated, despite reducing modularity and versatility of the stations 220, 230, the plant 200 of FIG.2, due to an integrated cleaning and assembly system 210, has the benefit of further reducing the operating cycles and maximizing residual thermal expansion (of the part being processed e.g. a cylinder head 11) that remains available at the assembly station 230. This is achieved by taking advantage of a common robot 252 arranged so that the cleaning station 220 and the assembly station 230 are within the work envelope (also called reach) of the robot 252 and thereby permitting direct transfer by the shared robot 252 from the cleaning station 220 to the assembly station 230 to minimize transfer time and the related drop in temperature. Accordingly, maximum advantage can be taken of thermal expansion created in the cleaning station 220 so as to enable further energy savings and reliable interference-fitting of uncooled additional components, i.e. without "freeze-fitting" Moreover, the capital expenditure for one of the industrial robots of FIG.2 is eliminated.

### Legend:

FIG.1
   - 11: cylinder head body
   - 12: intake/exhaust port
   - 14 valve 16: valve seat insert
   - 18: valve stem guide
FIG.2 & FIG.4-5
   - 100: plant
   - 120: cleaning station
   - 121: pre-washing unit
   - 122: flood-washing unit
   - 123: drying unit
   - 130: assembly station
   - 132: first mounting unit
   - 134: second mounting unit
   - 140: testing station
   - 150: conveyor system
   - 152, 153, 154: industrial robot
   - 162, 163: pedestal (housing auxiliary equipment)
FIG.3 & FIG.6
   - 11: cylinder head body
   - 200: plant
   - 210: integrated cleaning and assembly system
   - 220: cleaning station
   - 221: pre-washing unit
   - 222: flood-washing unit
   - 223: drying unit
   - 230: assembly station
   - 232: first mounting unit
   - 234: second mounting unit
   - 240: testing station
   - 250-1, 250-2, 250-3: conveyor sections
   - 252: industrial robot (shared)
   - 262: common pedestal (housing auxiliary equipment)

## Claims

1. A method of processing a machined automotive part, in particular for processing a cylinder head or a cylinder block of an internal combustion engine, said method comprising:
cleaning said machined automotive part with heated fluid in order to remove remainders of previous machining;
testing said machined automotive part for compliance with one or more predetermined requirements, in particular leak testing a cylinder head;
thermal interference fitting of one or more additional components to said machined automotive part;
**characterized by**
processing said machined automotive part according to a process sequence with said cleaning (R) prior to said thermal interference fitting (M) and with said thermal interference fitting prior to said testing (P) so that said thermal interference fitting makes use of residual thermal expansion of said machined automotive part due to cleaning with heated fluid.

2. The method according to claim 1, **characterized in that** cleaning comprises washing of said machined automotive part with heated liquid, in particular complete flood-washing by means of heated water with cleaning additives, at a washing temperature of at least 50°C, preferably at least 60°C.

3. The method according to claim 1 or 2, **characterized in that** said thermal interference fitting is carried out after cleaning said machined automotive part and without cooling of said one or more additional components.

4. The method according to claim 3, **characterized in that** shrink-fitting is carried out immediately after cleaning and without supplementary heating of said machined automotive part.

5. The method according to claim 1 or 2, **characterized in that** said thermal interference fitting comprises cooling at least one additional component to a temperature not lower than -60°C, preferably to a temperature in the range of 0°C to -40°C, and subsequent freeze-fitting said at least one additional component into said machined automotive part.

6. The method according to any one of claims 1 to 5, **characterized in that** cleaning comprises hot blow drying, in particular hot air blowing, at blow temperatures of at least 90°C.

7. The method according to any one of claims 1 to 6, wherein said machined automotive part is a cylinder head (11) of an internal combustion engine and thermal interference fitting said additional components comprises parallelized fitting of at least several, in particular four, valve seat inserts (16) and/or parallelized fitting of several, in particular four, valve stem guides (18).

8. The method according to any one of claims 1 to 6, wherein said machined automotive part is a cylinder block of an internal combustion engine and thermal interference fitting said additional components comprises parallelized fitting of at least several, in particular four to twelve, cylinder liners.

9. An industrial plant (100; 200) for performing the method according to any one of claims 1 to 8 of processing a machined automotive part, in particular a cylinder head (11) or a cylinder block of an internal combustion engine, said plant comprising:
a cleaning station (120; 220) for cleaning said machined automotive part with heated fluid in order to remove remainders of previous machining;
a testing station (140; 240) for testing said machined automotive part for compliance with one or more pre-determined requirements, in particular for leak testing a cylinder head (11);
an assembly station (130; 230) for thermal interference fitting of one or more additional components to said machined automotive part;
wherein said stations (120, 130, 140; 220; 230; 240) of said plant (100; 200) are arranged according to a processing sequence with cleaning (R) at said cleaning station (120; 220) prior to thermal interference fitting (M) at said assembly station (130; 230) and with thermal interference fitting at said assembly station (130; 230) prior to testing (P) at said testing station (140; 240) so that thermal interference fitting makes use of residual thermal expansion of said machined automotive part due to cleaning with heated fluid.

10. An industrial plant according to claim 9, **characterized in that** said cleaning station (120; 220) comprises a liquid washing unit, in particular a flood-washing unit (122; 222), configured to operate at a washing temperature of at least 50°C, preferably at least 60°C.

11. An industrial plant according to claim 9 or 10, **characterized in that** said assembly station (130; 230) is devoid of freeze-fitting equipment and comprises shrink-fitting equipment (132, 134, 163; 232, 234, 261) configured for pressing at least one additional component (16; 18) that is at room temperature into said machined automotive part (11) and making use of residual thermal expansion of said machined automotive part (11) due to cleaning with heated fluid.

12. An industrial plant according to claim 11, **characterized in that** said shrink-fitting equipment comprises a first mounting unit (132; 232) configured for parallelized insertion of several valve seat inserts and a second mounting unit (134; 234) configured for parallelized insertion of valve stem guides.

13. An industrial plant according to any one of claims 9 to 12, **characterized by** a six-degree-of-freedom industrial robot (252) arranged on a common pedestal in between said cleaning station (220) and said assembly station (230), said cleaning station and said assembly station being arranged within the work envelope of said robot so as to form an integrated cleaning and assembly system (210) together with said industrial robot (252).

14. An industrial plant according to any one of claims 9 to 13, further comprising an automated conveyor system (150; 250-1, 252, 250-2, 250-3) configured to convey said machined automotive part to said cleaning station (120; 220), from said cleaning station to said assembly station (130; 230) and from said assembly station to said testing station (140; 240).

15. An industrial plant according to any one of claims 9 to 14, **characterized in that** said cleaning station (120) comprises a blow drying unit (123; 223) configured for blow drying at blow temperatures of at least 90°C.

## Patentansprüche

1. Verfahren zum Weiterverarbeiten eines bearbeiteten Kraftfahrzeugteils, insbesondere zum Weiterverarbeiten eines Zylinderkopfes oder eines Zylinderblocks eines Verbrennungsmotors, das Verfahren umfassend:
Reinigen des bearbeiteten Kraftfahrzeugteils mit erwärmtem Fluid, um Reste einer vorhergehenden Bearbeitung zu entfernen;
Prüfen des bearbeiteten Kraftfahrzeugteils auf Erfüllung einer oder mehrerer vorbestimmter Anforderungen, insbesondere Lecktesten eines Zylinderkopfes;
Montage durch thermische Presspassung von einem oder mehreren zusätzlichen Bauteilen an das bearbeitete Kraftfahrzeugteil;
**gekennzeichnet durch**
Weiterverarbeiten des bearbeiteten Kraftfahrzeugteils gemäß einem Verfahrensablauf mit dem Reinigen (R) vor der Montage **durch** thermische Presspassung (M) und mit der Montage **durch** thermische Presspassung vor dem Prüfen (P), so dass die Montage **durch** thermische Presspassung restliche Wärmeausdehnung des bearbeiteten Kraftfahrzeugteils aufgrund des Reinigens mit erwärmtem Fluid ausnutzt.

2. Verfahren nach Anspruch 1, **dadurch gekennzeichnet, dass** das Reinigen Waschen des bearbeiteten Kraftfahrzeugteils mit erwärmter Flüssigkeit umfasst, insbesondere vollständiges Flutwaschen mittels erwärmtem Wasser mit Reinigungszusätzen, bei einer Waschtemperatur von mindestens 50°C, vorzugsweise mindestens 60°C.

3. Verfahren nach Anspruch 1 oder 2, **dadurch gekennzeichnet, dass** die Montage durch thermische Presspassung nach dem Reinigen des bearbeiteten Kraftfahrzeugteils und ohne Kühlung des einen oder der mehreren zusätzlichen Bauteile ausgeführt wird.

4. Verfahren nach Anspruch 3, **gekennzeichnet durch** eine Schrumpfpassung unmittelbar nach dem Reinigen und ohne zusätzliche Erwärmung des bearbeiteten Kraftfahrzeugteils.

5. Verfahren nach Anspruch 1 oder 2, **dadurch gekennzeichnet, dass** die Montage durch thermische Presspassung ein Kühlen mindestens eines zusätzlichen Bauteils auf eine Temperatur nicht unterhalb von -60°C, vorzugsweise auf eine Temperatur im Bereich von 0°C bis -40°C, und anschließende Tiefkühl-Presspassung des zumindest einen zusätzlichen Bauteils in das bearbeitete Kraftfahrzeugteil umfasst.

6. Verfahren nach einem der Ansprüche 1 bis 5, **dadurch gekennzeichnet, dass** das Reinigen Heißblastrocknen, insbesondere Heißluftblasen, bei Blastemperaturen von mindestens 90°C umfasst.

7. Verfahren nach einem der Ansprüche 1 bis 6, wobei das bearbeitete Kraftfahrzeugteil ein Zylinderkopf (11) eines Verbrennungsmotors ist und die Montage durch thermische Presspassung der zusätzlichen Bauteile eine parallelisierte Montage von mindestens mehreren, insbesondere vier, Ventilsitz-Einsätzen (16) und/oder eine parallelisierte Montage von mehreren, insbesondere vier, Ventilschaftführungen (18) umfasst.

8. Verfahren nach einem der Ansprüche 1 bis 6, wobei das bearbeitete Kraftfahrzeugteil ein Zylinderblock eines Verbrennungsmotors ist und die Montage durch thermische Presspassung der zusätzlichen Bauteile die parallelisierte Montage von mindestens mehreren, insbesondere vier bis zwölf, Zylinderlaufbuchsen umfasst.

9. Industrielle Anlage (100; 200) zum Durchführen des Verfahrens nach einem der Ansprüche 1 bis 8 zum Weiterverarbeiten eines bearbeiteten Kraftfahrzeugteils, insbesondere zum Weiterverarbeiten eines Zylinderkopfes (11) oder eines Zylinderblocks eines Verbrennungsmotors, wobei die Anlage umfasst:
eine Reinigungsstation (120; 220) zum Reinigen des bearbeiteten Kraftfahrzeugteils mit erwärmtem Fluid, um Reste einer vorhergehenden Bearbeitung zu entfernen;
eine Prüfstation (140; 240) zum Prüfen des bearbeiteten Kraftfahrzeugteils auf Erfüllung einer oder mehrerer vorbestimmter Anforderungen, insbesondere zum Lecktesten eines Zylinderkopfes (11);
eine Montagestation (130; 230) zur Montage durch thermische Presspassung von einem oder mehreren zusätzlichen Bauteilen an das bearbeitete Kraftfahrzeugteil;
wobei die Stationen (120, 130, 140; 220, 230, 240) der Anlage (100; 200) gemäß einem Verfahrensablauf angeordnet sind mit Reinigen (R) an der Reinigungsstation (120; 220) vor der Montage durch thermische Presspassung (M) an der Montagestation (130; 230) und mit Montage durch thermische Presspassung (M) an der Montagestation (130; 230) vor dem Prüfen (P) an der Prüfstation (140; 240), so dass die Montage durch thermische Presspassung restliche Wärmeausdehnung des bearbeiteten Kraftfahrzeugteils aufgrund des Reinigens mit erwärmtem Fluid ausnutzt.

10. Industrielle Anlage nach Anspruch 9, **dadurch gekennzeichnet, dass** die Reinigungsstation (120; 220) eine Flüssigkeits-Wascheinheit, insbesondere eine Flut-Wascheinheit (122; 222) umfasst, welche eingerichtet ist auf einen Betrieb bei einer Waschtemperatur von mindestens 50°C, vorzugsweise mindestens 60°C.

11. Industrielle Anlage nach Anspruch 9 oder 10, **dadurch gekennzeichnet, dass** die Montagestation (130; 230) keine Ausrüstung zur Tiefkühl-Passung umfasst und Ausrüstung zur Schrumpfpassung (132, 134, 163; 232, 234, 261) umfasst, welche eingerichtet ist um mindestens ein zusätzliches Bauteil (16; 18), das bei Raumtemperatur ist, in das bearbeitete Kraftfahrzeugteil (11) zu passen und die restliche Wärmeausdehnung des bearbeiteten Kraftfahrzeugteils aufgrund des Reinigens mit erwärmtem Fluid auszunutzen.

12. Industrielle Anlage nach Anspruch 11, **dadurch gekennzeichnet, dass** die Ausrüstung zur Schrumpfpassung eine erste Montageeinheit (132; 232), die zum parallelisierten Einbau mehrerer Ventilsitzringe eingerichtet ist, und eine zweite Montageeinheit (134; 234) umfasst, die eingerichtet ist zum parallelisierten Einbau von Ventilschaftführungen.

13. Industrielle Anlage nach einem der Ansprüche 9 bis 12, **gekennzeichnet durch** einen Industrieroboter mit sechs Freiheitsgraden (252) auf einem gemeinsamen Sockel zwischen der Reinigungsstation (220) und der Montagestation (230), wobei die Reinigungsstation und die Montagestation, im Arbeitsbereich des Industrieroboters (252) angeordnet sind, um mit diesem ein integriertes Reinigungs- und Montagesystem (210) zu bilden.

14. Industrielle Anlage nach einem der Ansprüche 9 bis 13, weiterhin umfassend ein automatisches Fördersystem (150; 250-1, 252, 250-2, 250-3) das eingerichtet ist, das bearbeitete Kraftfahrzeugteil zur Reinigungsstation (120; 220), von der Reinigungsstation (120; 220) zur Montagestation (130; 230) und von der Montagestation zur Prüfstation (140; 240) zu fördern.

15. Industrielle Anlage nach einem der Ansprüche 9 bis 14, **dadurch gekennzeichnet, dass** die Reinigungsstation (120) eine Einheit zum Blastrocknen (123; 223) umfasst, welche eingerichtet ist zum Blastrocknen bei Blastemperaturen von mindestens 90°C.

## Revendications

1. Procédé pour le traitement d'une pièce usinée automobile, en particulier pour le traitement d'une culasse ou d'un bloc-cylindres d'un moteur à combustion interne, ledit procédé comprenant:
nettoyage de ladite pièce usinée automobile par fluide chauffé afin d'éliminer des restes d'un usinage précédent ;
test de ladite pièce usinée automobile en ce qui concerne la conformité avec une ou plusieurs exigences prédéterminées, en particulier test d'étanchéité d'une culasse ;
assemblage par frettage d'un ou de plusieurs composants supplémentaires avec ladite pièce usinée automobile ;
**caractérisé par**
traitement de ladite pièce usinée automobile selon une séquence de traitement avec ledit nettoyage (R) avant ledit assemblage par frettage (M) et avec ledit assemblage par frettage avant ledit test (P) de sorte que ledit montage par frettage fait usage de dilatation thermique résiduelle de ladite pièce usinée automobile due au nettoyage par fluide chauffé.

2. Procédé selon la revendication 1, **caractérisé en ce que** le nettoyage comprend un lavage de ladite pièce usinée automobile avec un liquide chauffé, en particulier un lavage par turbulence au moyen d'eau chaude avec des additifs de nettoyage, à une température de lavage d'au moins 50°C, de préférence d'moins 60°C.

3. Procédé selon la revendication 1 ou 2, **caractérisé en ce que** l'assemblage par frettage est réalisé après le nettoyage de ladite pièce usinée automobile et sans refroidissement dudit/desdits un ou plusieurs composants supplémentaires.

4. Procédé selon la revendication 3, **caractérisé en ce qu'**un frettage est réalisé immédiatement après le nettoyage et sans chauffage supplémentaire de ladite pièce usinée automobile.

5. Procédé selon la revendication 1 ou 2, **caractérisé en ce que** l'assemblage par frettage comprend le refroidissement d'au moins un composant supplémentaire à une température non inférieure à -60°C, de préférence à une température dans la gamme de 0°C à -40°C, et le frettage par refroidissement subséquent dudit au moins un composant supplémentaire refroidi dans ladite pièce usinée automobile.

6. Procédé selon l'une quelconque des revendications 1 à 5, **caractérisé en ce que** le nettoyage comprend le séchage par soufflage à chaud, en particulier par soufflage d'air chaud, à des températures de soufflage d'au moins 90°C.

7. Procédé selon l'une quelconque des revendications 1 à 6, dans lequel ladite pièce usinée automobile est une culasse d'un moteur à combustion interne et l'assemblage par frettage desdits composants supplémentaires comprend l'assemblage parallélisé d'au moins plusieurs, en particulier de quatre, inserts de siège de soupape (16) et / ou l'assemblage parallélisé de plusieurs, en particulier quatre, guides de tige de soupape (18).

8. Procédé selon l'une quelconque des revendications 1 à 6, dans lequel ladite pièce usinée automobile est un bloc-cylindres d'un moteur à combustion interne et l'assemblage par frettage desdits composants supplémentaires comprend l'assemblage parallélisé d'au moins plusieurs, en particulier quatre à douze, chemises de cylindres.

9. Installation industrielle (100; 200) pour mettre en oeuvre le procédé de traitement d'une pièce usinée automobile selon l'une quelconque des revendications 1 à 8, en particulier pour le traitement d'une culasse (11) ou d'un bloc-cylindres d'un moteur à combustion interne, , ladite installation comprenant:
un poste de nettoyage (120; 220) pour le nettoyage de ladite pièce usinée automobile par fluide chauffé afin d'éliminer des restes d'un usinage précédent;
un poste de test (140; 240) pour tester ladite pièce usinée automobile en ce qui concerne la conformité avec une ou plusieurs exigences prédéterminées, en particulier de test d'étanchéité d'une culasse (11);
un poste de montage (130; 230) pour l'assemblage par frettage d'un ou de plusieurs composants supplémentaires avec ladite pièce usinée automobile;
lesdits postes (120, 130, 140; 220, 230; 240) de ladite installation (100; 200) étant disposés selon une séquence de traitement avec nettoyage (R) au poste de nettoyage (120; 220) avant assemblage par frettage (M) au poste de montage (130; 230) et avec assemblage par frettage au poste de montage (130; 230) avant test (P) au poste de test (140; 240) de sorte que ledit montage par frettage fait usage de dilatation thermique résiduelle de ladite pièce usinée automobile due au nettoyage par fluide chauffé.

10. Installation industrielle selon la revendication 9, **caractérisé en ce que** ledit poste de nettoyage (120; 220) comprend une unité de lavage par liquide, en particulier une unité de lavage par turbulence (122; 222), configurée pour fonctionner à une température de lavage d'au moins 50°C, de préférence d'au moins 60°C.

11. Installation industrielle selon la revendication 9 ou 10, **caractérisé en ce que** ledit poste de montage (130; 230) est dépourvu d'équipement de frettage par refroidissement et comprend un équipement de frettage (132, 134, 163; 232, 234, 261) configuré pour presser au moins un composant supplémentaire (16; 18) qui est à température ambiante dans ladite pièce usinée automobile (11) et pour faire usage de dilatation thermique résiduelle de ladite pièce usinée automobile (11) due au nettoyage par fluide chauffé.

12. Installation industrielle selon la revendication 11, **caractérisé en ce que** ledit équipement de frettage comprend une première unité de montage (132; 232) configurée pour l'insertion parallélisée de plusieurs inserts de siège de soupape et une deuxième unité de montage (134; 234) configurée pour l'insertion parallélisée de guides de tige de soupape.

13. Installation industrielle selon l'une quelconque des revendications 9 à 12, **caractérisé par** un robot industriel (252) à 6-degrés-de-liberté robot disposé sur un socle commun entre ledit poste de nettoyage (220) et ledit poste de montage (230), ledit poste de nettoyage et ledit poste de montage étant disposée à l'intérieur de l'enveloppe de travail dudit robot de manière à former conjointement avec ledit robot industriel (252) un système de nettoyage et de montage intégré (210).

14. Installation industrielle selon l'une quelconque des revendications 9 à 13, comprenant en outre un système de transport automatisé (150; 250-1, 252, 250-2, 250-3) configuré pour transmettre ladite pièce usinée automobile audit poste de nettoyage (120; 220), à partir dudit poste de nettoyage audit poste de montage (130; 230) et à partir dudit poste de montage audit poste de test (140; 240) .

15. Installation industrielle selon l'une quelconque des revendications 9 à 14, **caractérisé en ce que** ledit poste de nettoyage (120) comprend une unité de séchage par soufflage (123; 223) configurée pour séchage par soufflage à des températures de soufflage d'au moins 90°C.
